# EUROPEAN PATENT APPLICATION

(11) **EP 4 825 705 A1**
(43) Date of publication of application: **21.10.2026**
(21) Application number: 25219740.5
(22) Date of filing: 01.12.2025
(51) Int. Cl.: B62D 15/02, B62D 6/00, B60W 30/12, B60W 40/08, B60W 50/08

(54) **VEHICLE AND METHOD FOR CONTROLLING SAME**

(30) Priority: 16.04.2025 KR 20250049464
(71) Applicant: Hyundai Motor Company, Seoul 06797 (KR); Kia Corporation, Seoul 06797 (KR)
(72) Inventor: KIM, Jong Chul, 18280 Hwaseong-si, Gyeonggi-do (KR); CHOI, Eun Young, 18280 Hwaseong-si, Gyeonggi-do (KR); PARK, Se Young, 18280 Hwaseong-si, Gyeonggi-do (KR); KANG, Dong Hun, 18280 Hwaseong-si, Gyeonggi-do (KR); KIM, Su Hyun, 18280 Hwaseong-si, Gyeonggi-do (KR); LEE, Byoung Joon, 18280 Hwaseong-si, Gyeonggi-do (KR); KANG, Yim Ju, 18280 Hwaseong-si, Gyeonggi-do (KR)
(74) Representative: Viering, Jentschura & Partner mbB Patent- und Rechtsanwälte

(57) **Abstract**

A vehicle and a method for controlling the same are disclosed. An autonomous vehicle control device of a vehicle may include: a processor; and a memory storing at least one instruction that is configured, when executed by the processor, to cause the autonomous vehicle control device to: detect, during a driving control of the vehicle by the autonomous vehicle control device, a hands-off state of a driver with respect to a steering wheel of the vehicle; and reduce, based on at least one of an eye gaze direction of the driver or a body movement of the driver in the hands-off state satisfying a predetermined condition, a steering torque of the vehicle before the driver grips the steering wheel.

## Description

### CROSS-REFERENCE TO RELATED APPLICATION

This application claims priority to and the benefit of Korean Patent Application No. 10-2025-0049464, filed in the Korean Intellectual Property Office on April 16, 2025, the disclosure of which is incorporated herein by reference in its entirety.

### FIELD OF TECHNOLOGY

The present disclosure relates to autonomous driving of vehicles, and more specifically to a technique for operating a steering function in autonomous driving.

### BACKGROUND

In an autonomous driving system, a steering control technology may allow a vehicle to drive while maintaining a lane even in a hands-off situation without driver intervention.

However, in some implementations of automatic steering control, when a driving grips the steering wheel and the vehicle transitions from a hands-off state to a hands-on state, steering inconsistency may occur and the driver may experience inconsistency in the steering torque of the vehicle.

### SUMMARY

The technical problem to be achieved by the present disclosure has been devised to solve the above-described problem, and an object of the present disclosure is to control a steering torque in advance before the hands-on state when movements of a gaze and a body of a driver in the hands-off state satisfies a preset condition.

The problems to be solved by the present disclosure are not limited to the problems mentioned above, and other problems not mentioned will be clearly understood by a person skilled in the art from the following description.

According to one or more example embodiments of the present disclosure, an autonomous vehicle control device of a vehicle may include: a processor; and a memory storing at least one instruction that is configured, when executed by the processor, to cause the autonomous vehicle control device to: detect, during a driving control of the vehicle by the autonomous vehicle control device, a hands-off state of a driver with respect to a steering wheel of the vehicle; and reduce, based on at least one of an eye gaze direction of the driver or a body movement of the driver in the hands-off state satisfying a predetermined condition, a steering torque of the vehicle before the driver grips the steering wheel.

The at least one instruction may be configured, when executed by the processor, to further cause the autonomous vehicle control device to: control, after the driver grips the steering wheel and based on a steering input of the driver being applied to the steering wheel, the steering torque of the vehicle.

The at least one instruction may be configured, when executed by the processor, to further cause the autonomous vehicle control device to: control, based on at least one of the eye gaze direction of the driver or the body movement of the driver in the hands-off state satisfying the predetermined condition, a steering angle of the vehicle before the driver grips the steering wheel.

The predetermined condition may include the eye gaze direction of the driver being directed at the steering wheel.

The predetermined condition may include the eye gaze direction of the driver being away from the steering wheel and moving towards the steering wheel by at least a predetermined distance or a predetermined angle.

The predetermined condition may include the eye gaze direction of the driver being directed at the steering wheel for at least a predetermined time duration.

The predetermined condition may include a distance between a hand of the driver and the steering wheel being less than or equal to a predetermined threshold distance.

The predetermined condition may include a position of a driver seat being within a predetermined range and a weight distribution on the driver seat corresponding to a predetermined pattern.

The predetermined pattern may include determined based on driving history data of the driver. The driving history data may include at least one of a road shape and a driving pattern.

The at least one instruction may include configured, when executed by the processor, to further cause the autonomous vehicle control device to: set, based on autonomous driving control of the vehicle by the autonomous vehicle control device being activated, the steering torque to a first value. The first value may be greater than a second value corresponding to the reduced steering torque of the vehicle; and output, via a user interface of the vehicle, based on at least one of the eye gaze direction of the driver or the body movement of the driver in the hands-off state satisfying the predetermined condition, a notification about a transfer of control of the vehicle.

According to one or more example embodiments of the present disclosure, a method performed by an apparatus of a vehicle may include: detecting, during a driving control of the vehicle by an autonomous driving system of the vehicle, a hands-off state of a driver with respect to a steering wheel of the vehicle; and reducing, based on at least one of an eye gaze direction of the driver or a body movement of the driver in the hands-off state satisfying a predetermined condition, a steering torque of the vehicle before the driver grips the steering wheel.

The method may further include: controlling, after the driver grips the steering wheel and based on a steering input of the driver being applied to the steering wheel, the steering torque of the vehicle.

The method may further include: controlling, based on at least one of the eye gaze direction of the driver or the body movement of the driver in the hands-off state satisfying the predetermined condition, a steering angle of the vehicle before the driver grips the steering wheel.

The predetermined condition may include the eye gaze direction of the driver being directed at the steering wheel.

The predetermined condition may include the eye gaze direction of the driver being away from the steering wheel and moving towards the steering wheel by at least a predetermined distance or a predetermined angle.

The predetermined condition may include the eye gaze direction of the driver being directed at the steering wheel for at least a predetermined time duration.

The predetermined condition may include a distance between a hand of the driver and the steering wheel being less than or equal to a predetermined threshold distance.

The predetermined condition may include a position of a driver seat being within a predetermined range and a weight distribution on the driver seat corresponding to a predetermined pattern.

The predetermined pattern may be determined based on driving history data of the driver. The driving history data may include at least one of a road shape and a driving pattern.

The method may further include: setting, based on autonomous driving control of the vehicle by the autonomous driving system being activated, the steering torque to a first value. The first value may be greater than a second value corresponding to the reduced steering torque of the vehicle; and outputting, via a user interface of the vehicle, based on at least one of the eye gaze direction of the driver or the body movement of the driver in the hands-off state satisfying the predetermined condition, a notification about a transfer of control of the vehicle.

### BRIEF DESCRIPTION OF THE DRAWINGS

FIG. 1 is a configuration diagram of an example vehicle.
FIG. 2 is a flowchart of example operations of controlling steering torque.
FIG. 3 is a detailed flowchart of example operations of controlling steering torque.
FIG. 4 is a diagram of an example operation of determining whether a gaze of a driver satisfies a predetermined condition.
FIG. 5 is a diagram of an example operation of reducing steering torque after hands-off and in advance before hands-on.

### DETAILED DESCRIPTION

Hereinafter, one or more example embodiments of the present disclosure will be described in detail with reference to the accompanying drawings.

However, the technical idea of the present disclosure is not limited to the example embodiment(s) to be described, but may be implemented in various different forms, and within the scope of the technical idea of the present disclosure, one or more of the constituent elements of the example embodiment(s) may be selectively combined or substituted for use.

Furthermore, the terminology used in the example embodiment(s) of the present disclosure (including technical and scientific terms), unless explicitly defined and described otherwise, may be interpreted as having a meaning that may be generally understood by one of ordinary skill in the art to which the present disclosure pertains, and generally used terms such as those defined in a dictionary may be interpreted in consideration of the contextual meaning in the relevant art.

Furthermore, the terminology used in the example embodiment(s) of the present disclosure is for describing the example embodiment(s) and is not intended to limit the present disclosure.

In this specification, the singular form may include the plural form unless specifically stated otherwise in the phrase, and when described as "at least one (or one or more) of A, B, and C", it may include one or more of all possible combinations that may be combined with A, B, and C.

Furthermore, in describing the constituent elements of the example embodiment(s) of the present disclosure, terms such as first, second, A, B, (a), (b), etc. may be used.

These terms are only for distinguishing a constituent element from other constituent elements, and the essence, order, or sequence of the constituent element is not limited by the terms.

And, when a constituent element is described as being 'connected', 'coupled', or 'joined' to another constituent element, it may include not only a case where the constituent element is directly connected, coupled, or joined to the other constituent element, but also a case where it is 'connected', 'coupled', or 'joined' via another constituent element between the constituent element and the other constituent element.

Furthermore, when described as being formed or disposed "on (top of) or under (below)" each constituent element, "on (top of) or under (below)" includes not only a case where the two constituent elements are in direct contact with each other, but also a case where one or more other constituent elements are formed or disposed between the two constituent elements. In addition, when expressed as "on (top of) or under (below)", it may include the meaning of not only an upward direction but also a downward direction with respect to one constituent element.

In the various flowcharts of this document, at least some of each step may be omitted or the mutual order thereof may be changed, and at least some of the example embodiment(s) of this document may be performed at a specific point in time of each step of the flowcharts. The operations of the various flowcharts of this document may be performed by at least one of the control device 100, the processor 130, or the autonomous vehicle 10. In addition, redundant content in the drawings of this document may be omitted.

"Autonomous driving system" or "driver control assistance system" referred to in this document means hardware and software that may assist a driver in continuously controlling the longitudinal and lateral movements of a vehicle. Such a driver control assistance system may be referred to as a "system" in this document.

A "feature" as referred to herein may mean a function of a specific system that provides assistance to a driver in a defined traffic scenario, situation, and system boundary.

"Dynamic Control" referred to in this document may mean performing operational and tactical functions required to move a vehicle in real time. This may include controlling the lateral and longitudinal movements of the vehicle, monitoring the road environment, responding to events in the road traffic environment, planning operations, and signaling.

"System Boundaries" referred to in this document may mean a verifiable or measurable limit or condition set by a manufacturer, to or within a condition that affects a system or a feature of the system designed to provide assistance to a driver and the ability of the system to operate as intended.

Herein, the term "steering inconsistency" is used to describe the feeling of disharmony or foreignness that a driver may perceive when gripping the steering wheel to switch from an autonomous driving state to a manual driving state. This term should be understood to broadly include similar sensations, such as an "unnatural steering feel," "a sense of resistance," or "a jarring steering sensation."

An automation level of an autonomous driving vehicle may be classified as follows, according to the American Society of Automotive Engineers (SAE). At autonomous driving level 0, the SAE classification standard may correspond to "no automation," in which an autonomous driving system is temporarily involved in emergency situations (e.g., automatic emergency braking) and/or provides warnings only (e.g., blind spot warning, lane departure warning, etc.), and a driver is expected to operate the vehicle. At autonomous driving level 1, the SAE classification standard may correspond to "driver assistance," in which the system performs some driving functions (e.g., steering, acceleration, brake, lane centering, adaptive cruise control, etc.) while the driver operates the vehicle in a normal operation section, and the driver is expected to determine an operation state and/or timing of the system, perform other driving functions, and cope with (e.g., resolve) emergency situations. At autonomous driving level 2, the SAE classification standard may correspond to "partial automation," in which the system performs steering, acceleration, and/or braking under the supervision of the driver, and the driver is expected to determine an operation state and/or timing of the system, perform other driving functions, and cope with (e.g., resolve) emergency situations. At autonomous driving level 3, the SAE classification standard may correspond to "conditional automation," in which the system drives the vehicle (e.g., performs driving functions such as steering, acceleration, and/or braking) under limited conditions but transfer driving control to the driver when the required conditions are not met, and the driver is expected to determine an operation state and/or timing of the system, and take over control in emergency situations but do not otherwise operate the vehicle (e.g., steer, accelerate, and/or brake). At autonomous driving level 4, the SAE classification standard may correspond to "high automation," in which the system performs all driving functions, and the driver is expected to take control of the vehicle only in emergency situations. At autonomous driving level 5, the SAE classification standard may correspond to "full automation," in which the system performs full driving functions without any aid from the driver including in emergency situations, and the driver is not expected to perform any driving functions other than determining the operating state of the system. Although the present disclosure may apply the SAE classification standard for autonomous driving classification, other classification methods and/or algorithms may be used in one or more configurations described herein. One or more features associated with autonomous driving control may be activated based on configured autonomous driving control setting(s) (e.g., based on at least one of: an autonomous driving classification, a selection of an autonomous driving level for a vehicle, etc.).

Based on one or more features (e.g., monitoring the driver's hands-on status and eye gaze direction) described herein, an operation of the vehicle may be controlled. The vehicle control may include various operational controls associated with the vehicle (e.g., autonomous driving control, sensor control, braking control, braking time control, acceleration control, acceleration change rate control, alarm timing control, forward collision warning time control, etc.).

One or more auxiliary devices (e.g., engine brake, exhaust brake, hydraulic retarder, electric retarder, regenerative brake, etc.) may also be controlled, for example, based on one or more features (e.g., monitoring the driver's hands-on status and eye gaze direction) described herein. One or more communication devices (e.g., a modem, a network adapter, a radio transceiver, an antenna, etc., that is capable of communicating via one or more wired or wireless communication protocols, such as Ethernet, Wi-Fi, near-field communication (NFC), Bluetooth, Long-Term Evolution (LTE), 5G New Radio (NR), vehicle-to-everything (V2X), etc.) may also be controlled, for example, based on one or more features (e.g., monitoring the driver's hands-on status and eye gaze direction) described herein.

Minimum risk maneuver (MRM) operation(s) may also be controlled, for example, based on one or more features (e.g., monitoring the driver's hands-on status and eye gaze direction) described herein. A minimal risk maneuvering operation (e.g., a minimal risk maneuver, a minimum risk maneuver) may be a maneuvering operation of a vehicle to minimize (e.g., reduce) a risk of collision with surrounding vehicles in order to reach a lowered (e.g., minimum) risk state. A minimal risk maneuver may be an operation that may be activated during autonomous driving of the vehicle when a driver is unable to respond to a request to intervene. During the minimal risk maneuver, one or more processors of the vehicle may control a driving operation of the vehicle for a set period of time.

Biased driving operation(s) may also be controlled, for example, based on one or more features (e.g., monitoring the driver's hands-on status and eye gaze direction) described herein. A driving control apparatus may perform a biased driving control. To perform a biased driving, the driving control apparatus may control the vehicle to drive in a lane by maintaining a lateral distance between the position of the center of the vehicle and the center of the lane. For example, the driving control apparatus may control the vehicle to stay in the lane but not in the center of the lane.

The driving control apparatus may identify a biased target lateral distance for biased driving control. For example, a biased target lateral distance may comprise an intentionally adjusted lateral distance that a vehicle may aim to maintain from a reference point, such as the center of a lane or another vehicle, during maneuvers such as lane changes. This adjustment may be made to improve the vehicle's stability, safety, and/or performance under varying driving conditions, etc. For example, during a lane change, the driving control system may bias the lateral distance to keep a safer gap from adjacent vehicles, considering factors such as the vehicle's speed, road conditions, and/or the presence of obstacles, etc.

An autonomous driving level and/or autonomous driving activation/deactivation may also be controlled, for example, based on one or more features (e.g., monitoring the driver's hands-on status and eye gaze direction) described herein. A driving control apparatus may perform an autonomous driving level control (e.g., a change of an autonomous driving level, a change of a required user attentiveness, etc.) or cause deactivation of an autonomous driving operation. For example, by changing the required user attentiveness, the driver may be required to place his/her hands on the driving wheel more often (e.g., at least once in a threshold time period, such as 5 seconds, 30 seconds, 1 minute, etc.). By changing the required user attentiveness, the driver may be required to look ahead more often (e.g., at least once in a threshold time period, such as 5 seconds, 30 seconds, 1 minute, etc.). By changing the autonomous driving level, one or more video contents may not be displayed on a display of the vehicle.

One or more sensors (e.g., IMU sensors, camera, LIDAR, RADAR, blind spot monitoring sensor, line departure warning sensor, parking sensor, light sensor, rain sensor, traction control sensor, anti-lock braking system sensor, tire pressure monitoring sensor, seatbelt sensor, airbag sensor, fuel sensor, emission sensor, throttle position sensor, inverter, converter, motor controller, power distribution unit, high-voltage wiring and connectors, auxiliary power modules, charging interface, etc.) may also be controlled, for example, based on one or more features (e.g., monitoring the driver's hands-on status and eye gaze direction) described herein.

An operation control for autonomous driving of the vehicle may include various driving control of the vehicle by the vehicle control device (e.g., acceleration, deceleration, steering control, gear shifting control, braking system control, traction control, stability control, cruise control, lane keeping assist control, collision avoidance system control, emergency brake assistance control, traffic sign recognition control, adaptive headlight control, driver warning control, autonomous driving operational design domain (ODD), engaging and/or disengaging an autonomous driving mode, etc.). One or more auxiliary devices (e.g., engine brake, exhaust brake, hydraulic retarder, electric retarder, regenerative brake, etc.) may also be controlled, for example, based on one or more features (e.g., monitoring the driver's hands-on status and eye gaze direction) described herein. One or more communication devices (e.g., a modem, a network adapter, a radio transceiver, an antenna, etc., that is capable of communicating via one or more wired or wireless communication protocols, such as Ethernet, Wi-Fi, near-field communication (NFC), Bluetooth, Long-Term Evolution (LTE), 5G New Radio (NR), vehicle-to-everything (V2X), etc.) may also be controlled, for example, based on one or more features (e.g., evaluating the engagement state of the driver) described herein.

The vehicle that an autonomous driving system is actively controlling may be referred to as an ego vehicle, a host vehicle, or an autonomous vehicle. The ego vehicle may also be referred to as a self-driving car, an autonomous car (AC), a driverless car, a robotaxi, a robotic car, or a robo-car. The ego vehicle may be the vehicle that is equipped with the autonomous driving system. Alternatively, the autonomous driving system may control the ego vehicle, for example, from an external and/or remote device, such as a server. The ego vehicle can be partially or wholly controlled (e.g., piloted, driven, etc.) remotely by a remote human driver. A car that is ahead of the ego vehicle (e.g., in the same driving lane as the ego vehicle) may be referred to as a vehicle in front (e.g., a vehicle directly in front), a vehicle ahead (e.g., a vehicle directly ahead), a lead vehicle, a leading vehicle, or a preceding vehicle. A car that follows the ego vehicle (e.g., in the same driving lane as the ego vehicle) may be referred to as a car behind, a trailing vehicle, a following vehicle, or a succeeding vehicle. An adjacent vehicle may refer to any vehicle located in any direction (e.g., front, rear, left, right, diagonal, etc.) from the ego vehicle as long as no other vehicles (e.g., intervening vehicles) exist between it and the ego vehicle (e.g., regardless of the distance from the ego vehicle). Alternatively, in some contexts, only those vehicles that are located within a threshold distance (e.g., line of sight and/or detection limit of one or more sensors of the ego vehicle) from the ego vehicle may be referred to as adjacent vehicles. A target vehicle may be any vehicle that is near the ego vehicle (e.g., within a threshold distance away from the ego vehicle). The target vehicle may be any vehicle that the autonomous driving system monitors, recognizes, identifies, tracks, and/or analyzes, either actively or passively, either once or multiple times, and either sporadically or continuously. The threshold distance may be, for example, the line of sight and/or the detection limit of one or more sensors of the ego vehicle, but the threshold distance may be a value (e.g., an adjustable value) that is less than the line of sight and/or the detection limit of the one or more sensors of the ego vehicle. The target vehicle can be, for example, a vehicle in front, a vehicle behind, a vehicle in a different lane than the driving lane of the ego vehicle (e.g., a vehicle to the left, a vehicle to the right, a vehicle in a diagonal direction, etc.), and/or an adjacent vehicle (e.g., regardless of the distance from the ego vehicle and/or regardless of whether there are intervening vehicle(s) between the target vehicle and the ego vehicle). A target vehicle may also be referred to as a surrounding vehicle, a nearby vehicle, an external vehicle, another vehicle (other vehicles), and so forth.

Hereinafter, one or more example embodiments will be described in detail with reference to the accompanying drawings, and the same or corresponding components will be denoted by the same reference numerals regardless of the reference numeral, and redundant description thereof will be omitted.

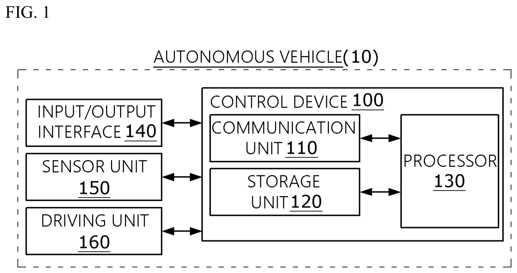

FIG. 1 is a configuration diagram of an example vehicle 10.

The vehicle 10 may include a control device (also referred to as a control circuit) 100, a communication unit (also referred to as a communication interface) 110, a storage unit (also referred to as storage or data storage) 120, a processor 130, an input/output interface (also referred to as a user interface) 140, a sensor unit (also referred to as a sensor or sensor array) 150, and a driving unit (also referred to as a drive train) 160. Each of these configurations of FIG. 1 may be implemented within the interior of the vehicle.

The control device 100 may be integrally formed with the internal components of the vehicle, and may be implemented as an independent device separate from the other components inside the vehicle 10 to communicate with the internal components through various connection means (e.g., a controller area network (CAN) bus, a wireless network, a wired connection, etc.). The control device 100 includes a communication unit 110, a storage unit 120, and a processor 130 to control a vehicle, and may further include other components such as an input/output interface 140, a sensor unit 150, and a driving unit 160 to perform a complex control function according to a driving situation. In the disclosure of this document, the control device 100 may be referred to as an autonomous vehicle control device 100.

The communication unit 110 may communicate with other control devices inside the vehicle to share data between systems, or transmit and receive various information through a connection with the outside of the vehicle. The communication unit 110 transmits control signals and data between internal components by using various in-vehicle communication schemes such as CAN communication and Ethernet, and may link driving information and external data in real time through communication with a user terminal, another vehicle (V2V), a vehicle-to-infrastructure (V2I), or an external server.

The communication unit 110 may perform short-range communication, GPS signal reception, Vehicle-to-Everything (V2X) communication, optical communication, broadcast transmission/reception, and Intelligent Transport Systems (ITS) communication functions, and may support stable data transmission at a short distance by using wireless communication technologies such as Bluetooth, Radio Frequency Identification (RFID), Infrared Data Association (IrDA), Ultra Wideband (UWB), ZigBee, Near Field Communication (NFC), Wi-Fi, Wi-Fi Direct, and Wireless USB. In addition, the communication unit 110 may include a mobile communication module based on a mobile communication network (LTE, 5G, or the like) and a wireless Internet module for wireless Internet connection to receive real-time data through long-distance communication and improve the performance of an autonomous driving system by interworking with cloud.

The storage unit 120 may include various types of memory capable of storing data, and may be integrated into the control device 100 or the processor 130 or may be configured in a separate module form. The storage unit 120 may include a non-volatile memory (e.g., a hard disk drive, a flash memory, an electrically erasable programmable read-only memory (EEPROM), an static random-access memory (SRAM), a ferroelectric random-access memory (FRAM), a phase-change random-access memory (PRAM), an magnetoresistive random-access memory (MRAM), or the like) and a volatile memory (e. g., a dynamic random-access memory (DRAM), an synchronous dynamic random-access memory (SDRAM), a double data rate synchronous dynamic random-access memory (DDR-SDRAM), or the like), and may be combined to implement a memory system with various capacities and capabilities.

The storage unit 120 may store gaze data, body movement data, and steering override-related learning data of a driver.

For example, the storage unit 120 may record and analyze the gaze movement pattern of the driver, the gaze time for a specific area, and the seat load change data (also referred to as weight distribution data), to support determining the steering intervention intention of the driver in advance.

In addition, the storage unit 120 may learn the driver's past driving behavior data. As a result, it may be determined whether the load movement of the seat corresponds to a predetermined (e.g., preset) pattern indicating the intervention of the driver. The load movement of the seat may refer to a movement pattern of or change in weight distribution (e.g., a center of load) on the seat. For example, the load movement may represent a pattern of movement of the driver seated on the vehicle seat.

Further, the storage unit 120 may store a steering reaction force reduction reference and a steering pattern set according to a preference of the driver, to provide personalized steering control.

The storage unit 120 may store instructions that may drive various example embodiment(s) of the disclosure. Such instructions, when executed by the processor (130), may include instructions that cause a steering torque of the vehicle to be reduced in advance before the driver grips steering wheel when at least one of the driver's gaze or the driver's body movement in a hands-off state satisfies a predetermined condition.

The processor 130 may communicate with the communication unit 110, the storage unit 120, the input/output interface 140, the sensor unit 150, the driving unit 160, and various internal components of the vehicle 10 through an electrical or operational connection, and may control the operation of each component and perform data processing. The processor 130 is a central processing unit for executing instructions and calculating data, and may collect, process, and analyze data in real time according to a driving environment of a vehicle to perform vehicle control.

The processor 130 may be implemented in hardware, software, or a combination thereof, and may perform vehicle control logic in the form of, for example, a microcontroller, a field-programmable gate array (FPGA), an application-specific integrated circuit (ASIC), or the like. It may also include multiple processor configurations for control of complex autonomous driving and driver assistance systems. Such a processor configuration may support comprehensive control and stable performance of the vehicle through the execution of autonomous driving and assistance systems, sensor data processing, communication data management, and driving-related decision functions.

The input/output interface 140 serves to receive an input related to vehicle control from a user, and transmit a control state of the vehicle and system operation information to the user.

The input/output interface 140 may perform a function of receiving various inputs from a user and communicating a vehicle control state to the user. The input/output interface 140 may include an input means and an output means.

The input means may include a physical button, a selection area on the touch display, a voice recognition function, a gesture recognition function, and the like, through which the user may input a command such as an autonomous driving system activation request, a function changeover, or a driving assistance setting.

The output means may include a display, an audio module (e.g., a speaker), a haptic module, and the like, and may provide a user with a state of the autonomous driving system, a control switching request notification, whether a function is activated, and the like in a visual, audible, and tactile form.

In addition, the input/output interface 140 may receive an input of a driver through a touchscreen, a physical button such as a switch, a voice recognition system, or the like. In this way, the driver may transmit a command to the vehicle system, such as activation of autonomous driving function, change of the warning setting, and release of the warning.

The sensor unit 150 may include a plurality of sensors that sense various driving and environment information in real time to support stable operation of the autonomous driving system or the driver assistance system. The sensor unit 150 may measure a distance and a speed from a surrounding object through a long range detection sensor such as a Radio Detection and Ranging (RADAR) and a Light Detection and Ranging (LIDAR), and may detect an object near the vehicle 10 including an ultrasonic sensor.

The sensor unit 150 may include a camera. The cameras may be classified into an external camera and an internal camera. The external camera (e.g., a front camera) may recognize a road, a lane, and a surrounding environment, and the internal camera may detect a state of a driver (e.g., a gaze tracking state, a steering wheel gripping state, etc.) or an indoor situation to comprehensively grasp a situation inside and outside the vehicle. The sensor unit 150 may include a heart rate sensor, a pressure sensor, an infrared sensor, or the like to collect biometric information of the driver or various environmental data.

The camera may sense a gaze (e.g., eye gaze) direction of the user. For example, the camera may check the direction in which the user's gaze is directed based on the direction of the user's face, the angle of the head, the movement of the pupils, and the like. To this end, the camera may track the user's pupils in real time to detect whether they are looking at a specific area (e.g., steering wheel, road front, dashboard, etc.).

In addition, the sensor unit 150 may analyze corneal reflection data of the pupil through infrared technology and sense a gaze direction. In this way, it is possible to sense a gaze direction of the driver even in a dark environment.

The sensor unit 150 may include at least one pressure sensor capable of sensing a load of the seat. The pressure sensor may be included in the seat. For example, a pressure sensor may be integrated into the structure of the seat to sense a load applied to the seat surface in real time. The pressure sensors may be disposed at various seat positions in the vehicle, such as a driver's seat, a passenger seat, or a rear seat.

The driving unit 160 may include various components that provide a driving force necessary for driving of the vehicle 10 and control operation of the vehicle according to a command output from the control device 100. The driving unit 160 may be configured with devices that generate and transmit power of the vehicle, such as an engine, a motor, a transmission, and a wheel driving system, and a controller that controls the same, and acceleration, deceleration, and direction change of the vehicle 10 may be performed through these configurations.

The driving unit 160 is controlled to perform longitudinal control (acceleration and deceleration) and lateral control (lane maintenance and change) of the vehicle to maintain driving safety. For example, the output of the motor is adjusted by receiving an instruction from the control device 100, or the rotation speed and the direction of the wheel are adjusted so that the vehicle may follow the driving route.

In addition, the driving unit 160 may include a brake system to reduce or stop the vehicle speed while traveling. The drive unit 160 may control the vehicle 10 through an electric motor in the case of an electric vehicle and based on an engine output in the case of the internal combustion engine vehicle.

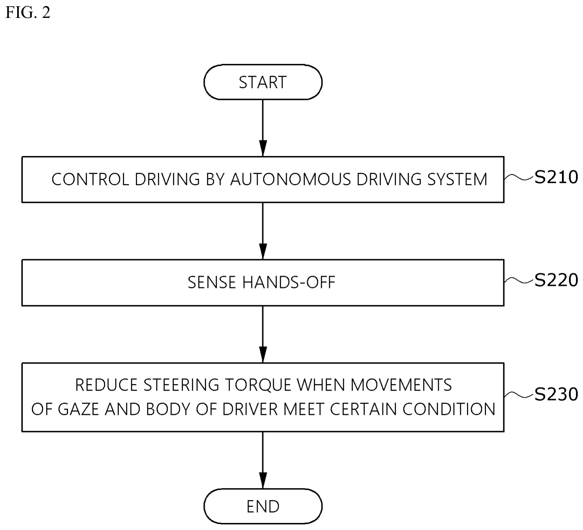

FIG. 2 is a flowchart of example operations of controlling steering torque.

The control device 100 may control the driving of the vehicle 10 by the autonomous driving system (S210).

The control device 100 may perform a lane keeping function of the vehicle based on lane information of a road, or perform control of maintaining a vehicle interval by sensing a distance from a vehicle ahead.

In this case, the control device 100 may control the steering angle and the steering torque of the vehicle 10 based on route information and road curvature data. For example, the control device 100 may calculate a driving route by comparing a center point of a road or a driving point adjacent thereto with a current position of the vehicle 10.

In addition, the control device 100 may calculate an error between a lateral position of the vehicle 10 and a specific point (e.g., a center point) of a road, and adjust the position of the vehicle so as to approach the center line of the road.

The control device 100 may calculate a difference between the heading value (driving direction angle) of the vehicle 10 and the target heading value of the road, and adjust the steering angle and the steering torque so that the vehicle is aligned with the driving direction of the road.

The control device 100 may perform a lane keeping function by comprehensively analyzing the curvature of the road, the lateral position error, and the heading error information to control the steering system of the vehicle 10.If the lateral position and the heading error exceed a set threshold, the control device 100 may adjust the control signal of the steering system so that the vehicle 10 does not deviate from the lane. The steering angle or the steering torque required for the lane keeping function may be controlled by a PID control method.

The control device 100 may sense the driver's hands-off (S220).

For example, the control device 100 may utilize a sensor (e.g., a grip sensor, a torque sensor, or the like) built into the steering wheel to check whether the driver's hand is in contact with the steering wheel.

If the driver's hand does not contact the steering wheel for a predetermined time or longer, the control device 100 may recognize the current state as a hands-off state. In this case, it may be further determined whether or not the user is looking forward, so that the driving control by the vehicle system is maintained.

If the movements of the gaze and the body of the driver satisfy a predetermined condition, the control device 100 may reduce the steering torque of the vehicle 10 (S230).

If at least one of the gaze of the driver or the movement of the driver's body in the hands-off state satisfies a predetermined condition, the control device 100 may control the steering angle of the vehicle in advance before the driver grips the steering wheel. As a result, the steering angle of the vehicle may be adjusted in advance before the driver intervenes in steering, so that the process of switching from autonomous driving to driver-driven steering may be smoothly switched.

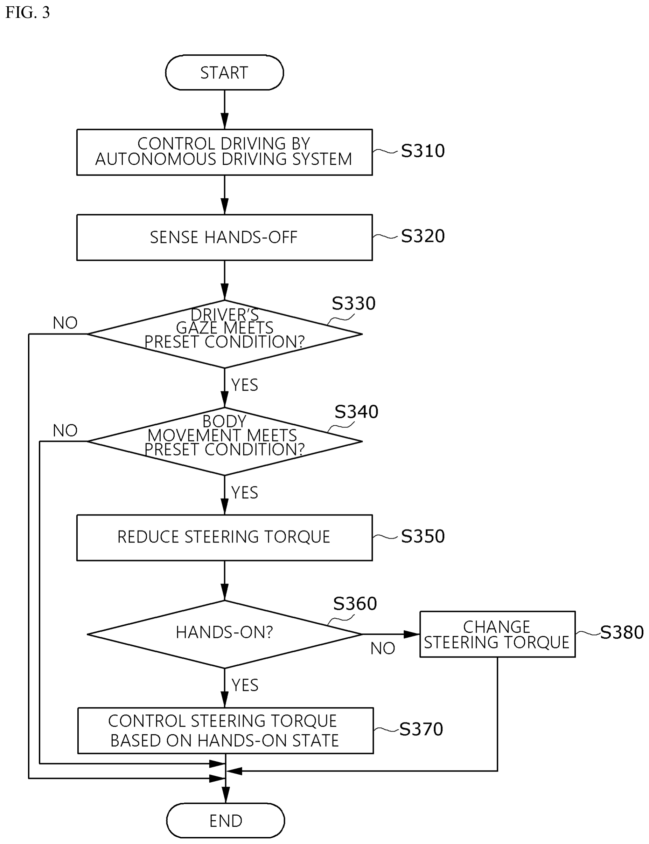

The control device 100 may adjust the steering torque in advance (e.g., before the driver grips the steering wheel) if the driver's gaze is focused on (e.g., directed at) a specific area of the steering wheel, the driver's hands approach the steering wheel, or the seat load is sensed in a specific pattern by the driver's body. This will be described in detail below with reference to FIG. 3.

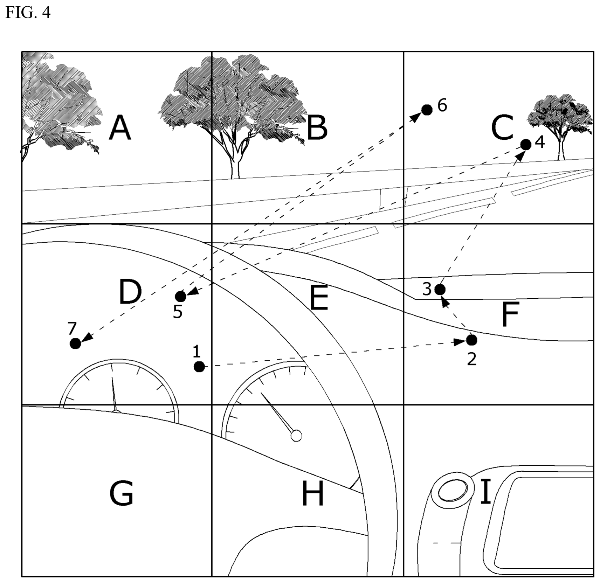

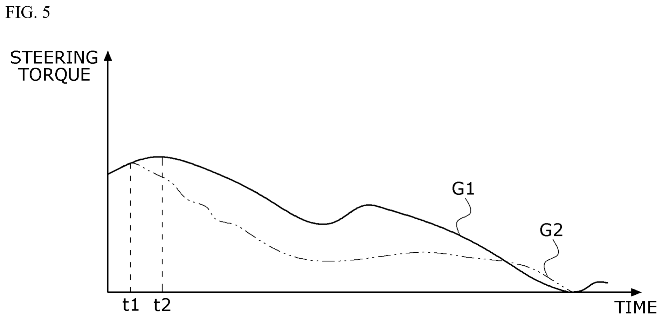

FIG. 3 is a detailed flowchart of example operations of controlling steering torque. The content of FIG. 3 that overlaps with the content of FIG. 2 is omitted. Reference is made to FIGS. 4 to 5 for a description of FIG. 3. FIG. 4 is a diagram of an example operation of determining whether a gaze of a driver satisfies a predetermined condition, and FIG. 5 is a diagram of an example operation of reducing steering torque after hands-off and in advance before hands-on.

The control device 100 may control the driving of the vehicle 10 by the autonomous driving system (S310), and may sense the driver's hands-off during the autonomous driving control (S320).

The control device 100 may determine whether the gaze of the driver satisfies a predetermined condition (S330).

The predetermined condition may include that the driver's gaze is focused on (e.g., directed at) at least a partial area of the steering wheel. For example, the control device 100 may utilize at least one of a camera module or an infrared sensor installed inside the vehicle to track a face direction and a pupil movement of the driver. In this case, the control device 100 may further analyze the trajectory and the angle at which the driver's pupil moves to the steering wheel to distinguish between a simple accidental gaze movement and a steering intervention intention.

The predetermined condition may include a state in which the driver's gaze is changed by a predetermined distance or a predetermined angle or more toward at least a partial area of the steering wheel based on a previous gaze area excluding the steering wheel. In other words, the predetermined condition may include the eye gaze direction of the driver having been away from the steering wheel and then moving towards the steering wheel by at least a predetermined distance or a predetermined angle.

For example, if the gaze of the driver starts from a previous gaze area such as the front of the vehicle or the dashboard and moves to a specific position (e.g., left, right, or top) of the steering wheel, the control device 100 may track this gaze movement distance and determine whether it is greater than or equal to a predetermined distance.

Referring to FIG. 4, the control device 100 may sense a gaze direction or a gaze area of the driver over time. The screen of FIG. 4 is a screen illustratively showing a screen viewed from the driver's seat toward the front.

In order to sense the driver gaze direction as shown in FIG. 4, the control device 100 may optionally divide the area inside the vehicle into nine areas in the form of a grid from area A to area I. The control device 100 may confirm the sensed gaze of the driver for each area divided as shown in FIG. 4. To this end, the control device 100 may track the driver's face direction, pupil movement, and gaze movement path in real time through a camera module or an infrared sensor inside the vehicle.

For example, the gaze of the driver may be moved from point 1 to point 7 according to a predetermined time. Each point may be the driver's gaze direction sensed at a particular point in time. In addition, at least a partial area of the steering wheel for determining whether a predetermined condition related to the driver's gaze is met may be selected as a specific area (e.g., area D). However, the present disclosure is not limited thereto, and other areas of the steering wheel may be selected.

If the gaze of the driver has moved from point 4 to point 5, it may be considered that the gaze of the driver at the previous point has moved more than a certain distance within a certain time. In this case, point 5 may be a point included in area D where the gaze of the driver satisfies a predetermined condition. Further, based on the coordinates of point 4, point 5 may be considered to be moved by a certain angle or more.

As described above, on the premise that the gaze of the driver is sensed in at least a partial area (e.g., area D) of the steering wheel, it may be determined that there is intervention of the driver if movement is sensed at a predetermined distance or at a predetermined angle or more from a previous point (e.g., point 4 or point 6) to a point corresponding to the partial area (for example, point 5 or point 7).

In addition, in order to filter the accidental gaze, a gaze of the driver sensed for a predetermined time or longer in at least a partial area of the steering wheel may also be included in a predetermined condition related to the gaze of a driver. For example, if the gaze of the driver sensed in area D is accumulated for a predetermined time or longer, it may be determined that a predetermined condition related to the gaze of the driver is met.

If the gaze of the driver does not satisfy the predetermined condition (S330: NO), the operation of FIG. 3 may end. In this case, the control device 100 determines that the driver does not show the steering intervention intention, and may be set to maintain the existing (e.g., current) autonomous driving state of the vehicle 10.

In contrast, if the gaze of the driver satisfies the predetermined condition (S330: YES), the control device 100 may check whether the body movement satisfies the predetermined condition (S340).

If the body movement satisfies the predetermined condition, it may include that a hand of the driver approaches at least a partial area of the steering wheel.

The control device 100 may sense the position and the movement direction of the hand of the driver through a camera module or a proximity sensor installed inside the vehicle. For example, if the driver's hand moves to a specific position (e.g., left, right, or top) of the steering wheel or approaches within a certain distance, the control device 100 may determine that the body movement satisfies a predetermined condition.

In addition, the control device 100 may further analyze the movement trajectory and speed of the hand to distinguish between a simple unconscious movement and an intention of steering intervention. For example, if the trajectory of the driver's hand toward the steering wheel is greater than or equal to a specific angle and the moving speed is greater than or equal to a set threshold, the control device 100 may determine that the driver intends to grip the steering wheel.

If the body movement satisfies the predetermined condition, it may include a case where a position of the driver seat is located within a predetermined area and a load movement of the driver seat corresponds to a predetermined pattern.

The control device 100 may check the load movement pattern through a load sensing sensor (e.g., a pressure sensor) provided on the seat if the driver moves the upper body or performs an operation to take the hand to the steering wheel.

If the identified load movement pattern corresponds to a predetermined pattern, the control device 100 may determine that the body movement satisfies a predetermined condition.

The predetermined pattern may be learned based on driving data (e.g., driving history data) of the driver including at least one of a road shape and a driving pattern. To this end, the control device 100 may use a deep learning algorithm to learn a steering override pattern based on the load movement data of the driver.

For example, the control device 100 may collect load movement data of the driver in various road types such as a curved road, a straight road, or an intersection, and determine whether such data consequently satisfies a hands-on state such as a driver steering override.

The control device 100 may analyze a pattern such as a direction of load movement, a movement distance, and a speed at a time when the driver held the steering wheel in the past. In addition, the control device 100 may set a load movement pattern corresponding to driver intervention by comprehensively considering information on load movement to the left, right, front, and rear of the seat, steering, whether a vehicle switch is operated, and the like.

In this case, the pattern of the load movement of the driver seat may be determined on the premise that the position of the driver seat is within a predetermined area. That is, the control device 100 may determine that the predetermined condition is not met if the position of the driver's seat is out of the predetermined area. For example, the control device 100 may not perform an operation of reducing the steering torque in advance by determining that the driver's hand is far from being closed if the driver's seat is out of the predetermined area in the rear or the inclined direction of the driver.

The above-described condition that the approach of the driver's hand to the steering wheel or the load movement corresponds to the predetermined pattern may be interpreted as example conditions that the body movement satisfies the predetermined condition.

If the body movement does not satisfy the predetermined condition (S340: NO), the operation of FIG. 3 may end. For example, if the driver's hand does not move in the steering wheel direction or the load movement pattern does not satisfy the predetermined condition, the control device 100 may end the process of FIG. 3 while maintaining the autonomous driving state of the vehicle.

Alternatively, if the body movement satisfies the predetermined condition (S340: YES), the control device 100 may reduce the steering torque of the vehicle 10 (S350).

For example, if it is determined that the hand of the driver approaches a specific area of the steering wheel or the load movement pattern satisfies a predetermined condition, the control device 100 may gradually reduce the steering torque of the vehicle to facilitate the driver to intervene in steering.

The processor 130 may analyze image data acquired in real time from a camera installed inside the vehicle to determine a body movement condition of the driver.

For example, the processor 130 may extract a current position or movement trajectory of the driver's hand using an image processing algorithm, and determine a distance between the driver's hands and the steering wheel based thereon. If it is determined that the driver's hand approaches the steering wheel within the predetermined threshold distance, the processor 130 may determine that the body movement of the driver satisfies the predetermined condition, and may reduce the steering torque of the vehicle in advance in the next step S350.

In this case, the control device 100 may reduce the steering torque based on data such as curvature, vehicle speed, an error between the lane center and the lateral position, and a heading value error so that the vehicle 10 may follow the lane center or at least maintain the lane.

By reducing the steering torque, it is possible to reduce an inconsistency that may occur as soon as the driver holds the steering wheel, and to perform the switching from the autonomous driving system to the driver-driven steering more smoothly. In this process, the control device 100 may analyze the curvature of the road, the vehicle speed, and the current steering angle in real time to optimize the steering torque reduction amount.

In addition, the control device 100 maintains the lane keeping function of the vehicle while reducing the steering torque, and may control the vehicle 10 so that the driving stability may be ensured even when the driver intervenes in steering. The control device 100 may analyze the curvature of the road, the current position of the vehicle, and the heading value (driving direction) data in real time, and adjust the steering angle or the steering torque so that the vehicle maintains the center of the road or the target path.

On the other hand, although FIG. 3 discloses that the steering torque is reduced if the predetermined condition related to the driver gaze and the body movement are satisfied, the steering torque reduction operation of step S350 may be performed only if the driver gaze satisfies the predetermined condition.

In addition, although FIG. 3 shows only the steering torque being reduced when predetermined conditions related to the driver's gaze and body movement are satisfied, the control device 100 may also pre-control the steering angle of the vehicle 10 before the driver grips the steering wheel.

The control device 100 may output visualized information if at least one of the gaze of the driver or the movement of the driver's body in the hands-off state satisfies the predetermined condition. The visualized information (e.g., a notification) may be, for example, about a transfer of control of the vehicle (e.g., from the autonomous driving system to the driver).

For example, if the gaze of the driver or the load movement (e.g., weight distribution or center of load) pattern of the driver's seat satisfies a predetermined condition, the control device 100 may output a notification message or a graphic icon such as a visual image (for example, a gradual color change of the steering wheel image) through an input/output interface (for example, the display). In this way, it is possible to intuitively indicate a form in which the steering torque is reduced in advance.

Further, it is possible to output a progress status indicator bar or an animated graphic indicating that the steering torque and the steering angle of the vehicle have been adjusted in advance, so as to convey the current state of the vehicle and the ready state of the steering system to the driver.

This visualized information may be dynamically changed according to the body movement of the driver. For example, if the driver's hand gradually approaches in the steering wheel direction, the brightness and brightness of the color of the steering wheel image may be emphasized step by step, effectively informing the driver that the vehicle is ready for steering changeover.

The control device 100 may determine whether the driver grips the handle, that is, whether the driver is in a hands-on state (S360).

For example, the control device 100 may utilize a grip sensor or a torque sensor embedded in the steering wheel to sense whether the driver's hand actually grips the steering wheel. If the steering torque is greater than or equal to a certain level after the driver raises his/her hand on the steering wheel, the control device 100 may determine that the driver has reached the hands-on state.

If the hands-on state is detected (S360: YES), the control device 100 may control the steering torque of the vehicle 10 by reflecting the hands-on state (S370).

The processor 130 may sense the steering input of the driver using various sensors (e.g., torque sensor, angle sensor, etc.) embedded in the steering wheel when (e.g., while or after) the driver grips the steering wheel. The "steering input" may include information about a direction in which the steering wheel is turned, a rotation angle, a magnitude and a direction (steering torque) of a force applied by the driver, etc.

Specifically, if the hands-on state is confirmed, the control device 100 may adjust the torque applied to the steering system of the vehicle in consideration of the steering intervention intention of the driver. In this case, since the steering torque is primarily reduced in step S350 described above, the control device 100 may control the steering torque more precisely according to the hands-on state of the driver.

In addition, if the steering angle is also adjusted primarily, the control device 100 may control the steering angle more precisely according to the hands-on state of the driver.

If the hands-on state is not detected after the steering torque is reduced (S360: NO), since the driver's intervention is not actually performed, the control device 100 may change the steering torque.

For example, the control device 100 may restore the steering torque to the original state or increase it as necessary in order to maintain the driving stability of the vehicle 10 according to autonomous driving.

In addition, if the control device 100 determines that an additional attempt that requires a hands-on state is required, the control device 100 may request the driver to switch to the hands-on state by providing a warning signal (e.g., a visual or audible notification).

FIG. 5 is an exemplary diagram of an operation of reducing steering torque in advance after hands-off and before hands-on.

Referring to FIG. 5, a graph G1 of a conventional steering torque control over time and a graph G2 of a steering torque control over the time when a predetermined condition is satisfied according to the present disclosure are shown.

At (or after) time t1 when the gaze of the driver and the movement of the body satisfy a predetermined condition, the control device 100 may reduce the steering torque of the vehicle 10 in advance as shown in the G2 graph. Then, at (or after) time t2 when the driver grips the steering wheel, the control device 100 may adjust the steering system of the vehicle 10 in consideration of the steering torque, the steering angle, and the like according to the hands-on state of the driver.

The steering torque of the vehicle is adjusted in a stepwise manner in advance before a hands-on state occurs in the hands-off state of the driver with respect to the steering wheel, so that an inconsistency with respect to the steering wheel may be minimized and the operation satisfaction of the driver may be improved.

The term "-unit" used herein may refer to a software or hardware component such as an FPGA or an ASIC, and the "-unit" performs certain roles. However, the "-unit" is not limited in meaning to software or hardware. A "-unit" may be configured to be in an addressable storage medium and may be configured to be executed by one or more processors. Therefore, as an example, a "-unit" includes components such as software components, object-oriented software components, class components, and task components, and processes, functions, attributes, procedures, subroutines, segments of program code, drivers, firmware, microcode, circuitry, data, databases, data structures, tables, arrays, and variables. The functions provided in the components and "-units" may be combined into a smaller number of components and "-units" or may be further separated into additional components and "-units". Furthermore, the components and "-units" may also be implemented to be executed by one or more central processing units (CPUs) in a device or a secure multimedia card.

An autonomous vehicle control device according to the present disclosure may comprise: a memory; and a processor electrically or adaptively connected to the memory, wherein the processor is configured to: detect a hands-off of a driver with respect to a steering wheel of a vehicle during driving control by an autonomous driving system, and when at least one of a gaze of the driver or a movement of a body of the driver in the hands-off state meets a preset condition, reduce a steering torque of the vehicle before the driver grips the steering wheel.

In the autonomous vehicle control device according to the present disclosure, the processor may be configured to: control a steering torque of the vehicle based on a steering input of the driver applied to the steering wheel when the driver grips the steering wheel.

In the autonomous vehicle control device according to the present disclosure, the processor may be configured to: control a steering angle of the vehicle before the driver grips the steering wheel when at least one of a gaze of the driver or a movement of the driver's body in the hands-off state meets a preset condition.

In the autonomous vehicle control device according to the present disclosure, the preset condition may comprise: that the driver's gaze is focused on at least a partial area of the steering wheel.

In the autonomous vehicle control device, the preset condition may comprise: a state in which the driver's gaze is changed by a predetermined distance or a predetermined angle or more toward at least a partial area of the steering wheel based on a previous gaze area excluding the steering wheel.

In the autonomous vehicle control device according to the present disclosure, the preset condition may comprise: a case where the driver's gaze is detected to be fixed on at least a part of the steering wheel for a predetermined time or longer.

In the autonomous vehicle control device according to the present disclosure, the preset condition may comprise: a case where a distance between a hand of the driver and at least a partial area of the steering wheel is determined to be less than or equal to a preset threshold distance.

In the autonomous vehicle control device according to the present disclosure, the preset condition may comprise: a case where a position of the driver seat is located within a preset area and a load movement of the driver seat corresponds to a preset pattern.

In the autonomous vehicle control device, the preset pattern may be learned based on driving data of the driver including at least one of a road shape and a driving pattern.

In the autonomous vehicle control device according to the present disclosure, the processor may be configured to output visualized information when at least one of a gaze of the driver or a movement of the driver's body in the hands-off state meets a preset condition.

A method for controlling an autonomous vehicle according to the present disclosure may comprise: determining whether at least one of a gaze of a driver or a movement of a body of the driver meets a preset condition in a hands-off situation of the driver during driving control by an autonomous driving system; and reducing a steering torque of the vehicle before the driver grips a steering wheel when at least one of the gaze of the driver or the movement of the body of the driver meets the preset condition.

The method for controlling an autonomous vehicle may further comprise: controlling a steering torque of the vehicle based on a steering input of the driver applied to the steering wheel when the driver grips the steering wheel.

The method for controlling an autonomous vehicle may further comprise: controlling a steering angle of the vehicle before the driver grips the steering wheel when at least one of a gaze of the driver or a movement of the driver's body in the hands-off state meets a preset condition.

In the method for controlling an autonomous vehicle, the preset condition may comprise: that the driver's gaze is focused on at least a partial area of the steering wheel.

In the method for controlling an autonomous vehicle, the preset condition may comprise: a state in which the driver's gaze is changed by a predetermined distance or a predetermined angle or more toward at least a partial area of the steering wheel based on a previous gaze area excluding the steering wheel.

In the method for controlling an autonomous vehicle, the preset condition may comprise: a case where the driver's gaze is detected to be fixed on at least a part of the steering wheel for a predetermined time or longer.

In the method for controlling an autonomous vehicle, the preset condition may comprise: a case where a distance between a hand of the driver and at least a partial area of the steering wheel is determined to be less than or equal to a preset threshold distance.

In the method for controlling an autonomous vehicle, the preset condition may comprise: a case where a position of the driver seat is located within a preset area and a load movement of the driver seat corresponds to a preset pattern.

In the method for controlling an autonomous vehicle, the preset pattern may be learned based on driving data of the driver including at least one of a road shape and a driving pattern.

The method for controlling an autonomous vehicle may further comprise: outputting visualized information when at least one of a gaze of the driver or a movement of the driver's body in the hands-off state meets a preset condition.

A steering torque of a vehicle is adjusted in a stepwise manner in advance before the hands-on state occurs in the driver's hands-off state on the steering wheel, so that inconsistency with respect to the steering wheel may be minimized and the operation satisfaction of the driver may be improved.

The effects of the present disclosure are not limited to the effects mentioned above, and other effects not mentioned will be clearly understood by a person skilled in the art from the following description.

Although one or more example embodiments of the present disclosure have been described above, it will be understood by one skilled in the art to which the technology pertains that the present disclosure may be variously modified and changed within a scope that does not depart from the spirit and scope of the present disclosure described in the following claims.

## Claims

1. An autonomous vehicle control device of a vehicle, the autonomous vehicle control device comprising:
a processor; and
a memory storing at least one instruction that is configured, when executed by the processor, to cause the autonomous vehicle control device to:
detect, during a driving control of the vehicle by the autonomous vehicle control device, a hands-off state of a driver with respect to a steering wheel of the vehicle; and
reduce, based on at least one of an eye gaze direction of the driver or a body movement of the driver in the hands-off state satisfying a predetermined condition, a steering torque of the vehicle before the driver grips the steering wheel.

2. The autonomous vehicle control device of claim 1, wherein the at least one instruction is configured, when executed by the processor, to further cause the autonomous vehicle control device to:
control, after the driver grips the steering wheel and based on a steering input of the driver being applied to the steering wheel, the steering torque of the vehicle.

3. The autonomous vehicle control device of claim 1 or 2, wherein the at least one instruction is configured, when executed by the processor, to further cause the autonomous vehicle control device to:
control, based on at least one of the eye gaze direction of the driver or the body movement of the driver in the hands-off state satisfying the predetermined condition, a steering angle of the vehicle before the driver grips the steering wheel.

4. The autonomous vehicle control device of anyone of claims 1-3,
wherein the predetermined condition comprises the eye gaze direction of the driver being directed at the steering wheel, or
wherein the predetermined condition comprises the eye gaze direction of the driver being away from the steering wheel and moving towards the steering wheel by at least a predetermined distance or a predetermined angle.

5. The autonomous vehicle control device of anyone of claims 1-4, wherein the predetermined condition comprises the eye gaze direction of the driver being directed at the steering wheel for at least a predetermined time duration.

6. The autonomous vehicle control device of anyone of claims 1-5, wherein the predetermined condition comprises a distance between a hand of the driver and the steering wheel being less than or equal to a predetermined threshold distance.

7. The autonomous vehicle control device of anyone of claims 1-6, wherein the predetermined condition comprises a position of a driver seat being within a predetermined range and a weight distribution on the driver seat corresponding to a predetermined pattern, wherein, optionally, the predetermined pattern is determined based on driving history data of the driver, wherein the driving history data comprises at least one of a road shape and a driving pattern.

8. The autonomous vehicle control device of anyone of claims 1-7, wherein the at least one instruction is configured, when executed by the processor, to further cause the autonomous vehicle control device to:
set, based on autonomous driving control of the vehicle by the autonomous vehicle control device being activated, the steering torque to a first value, wherein the first value is greater than a second value corresponding to the reduced steering torque of the vehicle; and
output, via a user interface of the vehicle, based on at least one of the eye gaze direction of the driver or the body movement of the driver in the hands-off state satisfying the predetermined condition, a notification about a transfer of control of the vehicle.

9. A method performed by an apparatus of a vehicle, the method comprising:
detecting, during a driving control of the vehicle by an autonomous driving system of the vehicle, a hands-off state of a driver with respect to a steering wheel of the vehicle; and
reducing, based on at least one of an eye gaze direction of the driver or a body movement of the driver in the hands-off state satisfying a predetermined condition, a steering torque of the vehicle before the driver grips the steering wheel,
wherein, optionally, the predetermined condition comprises the eye gaze direction of the driver being directed at the steering wheel, or the predetermined condition comprises the eye gaze direction of the driver being away from the steering wheel and moving towards the steering wheel by at least a predetermined distance or a predetermined angle.

10. The method of claim 9, further comprising:
controlling, after the driver grips the steering wheel and based on a steering input of the driver being applied to the steering wheel, the steering torque of the vehicle.

11. The method of claim 9 or 10, further comprising:
controlling, based on at least one of the eye gaze direction of the driver or the body movement of the driver in the hands-off state satisfying the predetermined condition, a steering angle of the vehicle before the driver grips the steering wheel.

12. The method of anyone of claims 9-11, wherein the predetermined condition comprises the eye gaze direction of the driver being directed at the steering wheel for at least a predetermined time duration.

13. The method of anyone of claims 9-12, wherein the predetermined condition comprises a distance between a hand of the driver and the steering wheel being less than or equal to a predetermined threshold distance.

14. The method of anyone of claims 9-13, wherein the predetermined condition comprises a position of a driver seat being within a predetermined range and a weight distribution on the driver seat corresponding to a predetermined pattern, wherein, optionally, the predetermined pattern is determined based on driving history data of the driver, wherein the driving history data comprises at least one of a road shape and a driving pattern.

15. The method of anyone of claims 9-14, further comprising:
setting, based on autonomous driving control of the vehicle by the autonomous driving system being activated, the steering torque to a first value, wherein the first value is greater than a second value corresponding to the reduced steering torque of the vehicle; and
outputting, via a user interface of the vehicle, based on at least one of the eye gaze direction of the driver or the body movement of the driver in the hands-off state satisfying the predetermined condition, a notification about a transfer of control of the vehicle.
